# FASCICULE DE BREVET EUROPEEN

(11) **EP 1 086 011 B1**
(45) Date de publication et mention de la délivrance du brevet: **17.03.2004**
(21) Numéro de dépôt: 00905112.9
(22) Date de dépôt: 11.02.2000
(51) Int. Cl.: B62D 1/28, G05D 1/03

(54) **CHARIOT MOTORISE AUTOGUIDE**
SELBSTSTEUERNDER MOTORKARREN
POWER-DRIVEN CARRIAGE WITH AUTOMATIC GUIDING SYSTEM

(30) Priorité: 17.02.1999 FR 9901904
(43) Date de publication de la demande: 28.03.2001
(73) Titulaire: Bougard, Philippe, 77340 Pontault Combault (FR)
(72) Inventeur: Bougard, Philippe, 77340 Pontault Combault (FR)
(74) Mandataire: Verdier, Louis
(86) Numéro de dépôt international: PCT/FR2000/000341
(87) Numéro de publication internationale: WO 2000/048893

(56) Documents cités:
- EP-A- 0 482 424
- US-A- 4 284 160
- US-A- 5 845 725

## Description

La présente invention concerne un système de manutention, appelé chariot motorisé autoguidé, permettant de transporter des charges ou de tracter des wagonnets destinés à alimenter des lignes de production industrielle.

Ce système s'inscrit dans un contexte global de réduction des coûts de production et notamment de réduction des coûts de manutention. Afin de réduire ces coûts, les entreprises doivent résoudre certains problèmes techniques, supprimer les stocks avancés sur ligne, éviter l'utilisation de véhicule à fourches ou les déplacements d'opérateurs...

On connaît divers types de véhicules autonomes, capables de suivre un parcours préétabli, tels que véhicule électrique, filoguidé ou encore fauteuil roulant automoteur à guidage automatique.

On connaît par exemple de tels véhicules motorisés autoguidés permettant de transporter des charges ou de tracter des wagonnets destinés à alimenter des lignes de production industrielle. Ces véhicules comprennent une carrosserie métallique supportant un tableau de commande et un gyrophare, un radar, une cellule de détection d'étape, un joystick, ainsi qu'un châssis supporté par des roues arrière et par une roue avant motrice et directrice, entraînée en traction par un moteur électrique à courant continu. Sur cette roue motrice et directrice sont embarqués un dispositif de guidage et un lecteur de puces électroniques, une batterie à courant continu, un pare chocs, un crochet d'attelage, un système de communication radio et un récepteur radio.

Cependant, les dispositifs de guidage existant sur chacun de ces véhicules, n'apportent pas forcément la flexibilité et la fiabilité nécessaires à la bonne gestion des flux dans un atelier de production ou tous locaux et lieux de stockage. En effet, matérialiser un parcours par des fils électriques enterrés dans le sol, des lignes de peinture métallisée ou portant des codes barres nécessite certains travaux. De plus, le dispositif de guidage utilisé et réalisé par capteur optique, émetteur récepteur infra rouge ou encore détecteur magnétique non solidaire de la roue directrice et motrice, ne permet pas d'assurer la précision indispensable au suivi de bandes ou de lignes.

Le but de la présente invention est de proposer un chariot motorisé autoguidé ayant pour vocation principale, flexibilité et fiabilité de l'approvisionnement automatique de matériel, depuis la zone de stockage jusque sur les différents postes de la ligne de fabrication, tout en augmentant la productivité et la sécurité. Ces exigences et problèmes techniques sont résolus selon l'invention de manière qu'il puisse se concevoir de façon simple et avantageuse.

Le chariot de la présente invention comprend un dispositif de guidage embarqué sur une roue motrice et directrice, et différents dispositifs de détection d'étapes. Le dispositif de guidage est capable de reconnaître et de suivre un parcours préétabli matérialisé par une bande adhésive réfléchissante collée au sol. Le dispositif de détection distingue des étapes diverses du parcours, telles que lignes droites, carrefours et virages. Le chariot motorisé est autonome et est équipé en outre, d'un système de communication radio lui permettant de détecter la présence d'un autre module de même nature. De plus, le chariot dispose d'un système de programmation de parcours permettant de procéder par apprentissage et de différents dispositifs de sécurité. Le fonctionnement du dispositif de guidage, de détection d'étapes ainsi que le système de programmation de parcours est contrôlé par un cerveau électronique.

Selon une première caractéristique, il est particulièrement avantageux que la réalisation du tracé au sol soit effectuée au moyen de bandes adhésives appelées bandes guides. En effet, un tel procédé est simple de réalisation et peu onéreux. Il permet de procurer une grande flexibilité aux entreprises dans le choix du parcours désiré et de l'adapter selon leur convenance.

Une des réalisations avantageuses de l'invention est dans la conception du dispositif de guidage embarqué. Ce dispositif comprend deux cellules photoélectriques ou optiques ou inductives fixées à l'ensemble moteur traction direction, ce qui lui procure une grande précision dans le suivi de la bande guide.

Une autre réalisation aussi avantageuse réside en sa capacité à gérer des étapes diverses, telles que changement de direction, arrêt pour chargement, déchargement de matériel, entrées/sorties carrefour ou terminus ; ceci, selon un déroulement de parcours dit « en relatif » ou « en absolu ». Pour un déroulement de parcours « en relatif », c'est à dire pour un parcours composé d'une succession d'étapes ; le chariot est équipé d'un dispositif de détection d'étapes réalisé par une cellule photoélectrique ou optique ou inductive (dit cellule de protection). Les étapes sont matérialisées par un marquage au sol réalisé en bandes adhésives. Pour un déroulement de parcours « en absolu », le chariot est capable de détecter qu'il n'est pas sur le bon parcours et/ou récupérer correctement son chemin à l'étape suivante. Dans ce cas, le dispositif de détection est un lecteur de puce électronique embarqué sur une roue motrice et directrice, et les étapes sont caractérisées par des puces électroniques collées au sol.

Il est en outre avantageux de matérialiser une étape par un marquage au sol. En effet, ce marquage est réalisé par au minimum 2 bandes adhésives parallèles, ceci permet de le distinguer d'une information parasite.

Il est également avantageux, afin d'éviter toute collision dans un carrefour, que les chariots soient munis d'un système de communication radio inter chariots, caractérisé par un émetteur récepteur. Lorsqu'un des chariots entre dans un carrefour, l'émetteur signale sa présence au récepteur d'un autre chariot situé dans les environs.

Selon un développement avantageux de l'invention, le chariot motorisé autoguidé est équipé d'un système de programmation de parcours permettant de procéder par apprentissage. Ce système est d'une grande simplicité, car il suffit, pour réaliser cette programmation, d'effectuer une série de validations sur un pupitre de programmation.

Par ailleurs, en cas de traction de wagonnets, il est particulièrement avantageux qu'il dispose de dispositifs de sécurité arrière. Ces sécurités se déclenchent lorsqu'un obstacle, quelqu'un ou quelque chose, entrave la bonne circulation des wagonnets, provoquant ainsi l'arrêt du chariot. Le principe de fonctionnement du premier dispositif repose sur un système de capteur et de ressorts. La tension, provoquée par l'arrêt d'un quelconque wagonnet et l'avance du chariot, est transmise à un crochet d'attelage. Si cette tension dépasse une valeur limite prédéfinie sur des ressorts, alors une touche de contact actionne un capteur.

Le deuxième dispositif de sécurité arrière est placé sur un timon. Est appelé timon, l'élément qui relie un chariot motorisé à un wagonnet ou un wagonnet à un autre. Ce timon dispose d'un détecteur magnétique pourvu d'une liaison radio qui communique avec un récepteur situé dans le chariot, et d'une barrière de protection qui pivote autour d'un axe central. Sur cette barrière est fixé un aimant dont la stabilité est assurée par des ressorts solidaires au timon. S'il y a rotation de la barrière de protection, l'aimant échappe à la portée du détecteur magnétique, et ce dernier par liaison radio transmet l'information au récepteur. Le tout permettant d'assurer la sécurité sur l'ensemble du train, en évitant de mettre en danger personnel et biens.

Ainsi, et selon la présente invention, un chariot motorisé autoguidé, permettant de transporter des charges ou de tracter des wagonnets destinés à alimenter des lignes de production industrielle, comprend une carrosserie métallique supportant un tableau de commande et un gyrophare, un radar, une cellule de détection d'étape, un joystick ainsi qu'un châssis supporté par des roues arrière et par une roue avant motrice et directrice, entraînée en traction par un moteur électrique à courant continu. Sur cette roue avant sont embarqués un dispositif de guidage et un lecteur de puces électroniques, le moteur électrique (19) à courant continu, le sous directrice (9), le dispositif de guidage (17) et le lecteur de puces électroniques (28) constituant ainsi un ensemble, une batterie à courant continu, un pare chocs, un crochet d'attelage, un système de communication radio et un récepteur radio.

Un tel chariot est principalement reconnaissable en ce que l'ensemble comportant ladite roue avant entraînée en traction par ledit moteur électrique à courant continu est entraîné en rotation par un moteur de direction, formant ainsi un bloc traction rotation, devant ou derrière lequel bloc est embarqué le dispositif de guidage constitué de deux cellules photoélectriques ou optiques ou inductives, ces cellules pivotant simultanément avec la roue avant tout en suivant une bande guide, .

Ces dispositions sont telles que l'information recueillie par ces cellules de guidage commande la navigation du chariot.

Selon une caractéristique de la présente invention, il comporte, pour la détection d'étapes selon un déroulement de parcours dit « en relatif », la cellule de détection d'étape photoélectrique ou optique ou inductive fixée sur un châssis, cette cellule de détection d'étape permettant d'identifier une étape du parcours par l'intermédiaire d'un marquage.

Ces dispositions sont telles que l'information recueillie par cette cellule de détection est gérée par un cerveau électronique.

Selon une autre caractéristique de la présente invention, le chariot comporte, pour la détection des étapes selon un déroulement de parcours dit « en absolu », le lecteur de puce électronique embarqué et des puces électroniques statiques disposées le long du parcours, qui stockent un numéro permettant de les identifier de manière unique, et auquel numéro est associée une action physique (gauche pour changement de direction à gauche, droite pour...),

Ces dispositions sont telles que l'information recueillie par ce lecteur de puce est gérée par le cerveau électronique, cette information indiquant au chariot sa présence sur le bon parcours.

Selon une autre caractéristique de la présente invention, pour la programmation de parcours par apprentissage, le chariot comporte :
- un commutateur de mise sous tension, qui est activé, et
- un commutateur qui est mis en position dite « apprentissage actif » pour un positionnement du chariot à son point de départ à l'aide du joystick qui permet de piloter manuellement le chariot,
- un bouton « départ » pour que le chariot suive automatiquement la bande guide qui décrit un parcours et s'arrête à chaque étape, dès que la cellule de détection aperçoit le marquage ou que le lecteur de puces électroniques lit le numéro de l'une des puces électroniques, ceci sur un parcours qui peut être de type fermé (en boude), cyclique ou encore ouvert (comportant différents points de départ).
- un pupitre de programmation pour renseigner le programme par une série de validations correspondant à une action (gauche, droite, tout droit, arrêt gare, entrée / sortie carrefour ou terminus) pour que le chariot exécute immédiatement cette action et se dirige à l'étape suivante.

Ces dispositions sont telles que, si une étape est dépassée sans avoir été validée, le chariot peut faire marche arrière grâce au joystick et l'étape est revalidée.

Ces dispositions sont aussi telles que, une fois cet apprentissage effectué le commutateur est mis en position dite « apprentissage non actif » pour que le chariot puisse fonctionner en automatique, dit mode normal, sans opérateur appuyant sur le bouton « départ ».

Ces dispositions sont encore telles que, en mode normal, à chaque passage du chariot sur le marquage ou une des puces électroniques, le chariot recherche en mémoire l'action à réaliser et l'exécute, ayant été prévu en outre de pouvoir insérer des étapes supplémentaires sans pour autant recommencer toute la programmation par apprentissage.

Le chariot comporte un système de communication radio installé sur tous les chariots pour la gestion de la circulation dans un carrefour, l'entrée et la sortie d'un carrefour étant matérialisées au sol, soit par le marquage, soit par une des puces électroniques.

Ces dispositions sont telles que, dès qu'un deuxième chariot et son convoi entrent dans un carrefour, le deuxième chariot et son convoi émet systématiquement un signal radio au moyen de son émetteur récepteur.

Ces dispositions sont encore telles que, si un premier chariot et son convoi sont déjà présents dans ce carrefour, alors ce même signal est reçu par son propre récepteur pour informer en retour de sa présence le deuxième chariot et son convoi qui devront attendre, pour circuler librement, la sortie du premier chariot et de son convoi hors du carrefour.

Le chariot comporte aussi un premier dispositif de sécurité arrière se déclenchant lorsqu'une tension, créée par l'arrêt d'un quelconque wagonnet et l'avance du chariot, est transmise au crochet d'attelage.

Ces dispositions sont telles que, si cette tension dépasse une valeur limite prédéfinie sur des ressorts, alors le déplacement d'une touche actionne un capteur, provoquant ainsi l'arrêt du chariot.

Le chariot comporte par ailleurs un deuxième dispositif de sécurité arrière placé sur un timon, qui dispose d'un détecteur magnétique pourvu d'une liaison radio qui communique avec le récepteur radio situé dans le chariot, et d'une barrière de protection qui pivote autour d'un axe central, sur cette barrière étant fixé un aimant dont la stabilité est assurée par des ressorts solidaires du timon,

Ces dispositions sont telles que, s'il y a rotation de la barrière de protection, l'aimant échappe à la portée du détecteur magnétique, et ce dernier par liaison radio transmet l'information au récepteur, provoquant ainsi l'arrêt du chariot.

Le chariot coopère avec un dispositif de tracé au sol, définissant un parcours, qui est matérialisé au moyen de bandes adhésives appelées bandes guides.

Le marquage , définissant une étape, est matérialisé par au minimum 2 bandes adhésives parallèles, pour une distinction entre ce marquage et une information parasite.

Les dessins annexés illustrent l'invention.

La figure 1 représente en perspective, un chariot selon l'invention.

La figure 2 représente en coupe le dispositif de guidage et la première sécurité arrière.

La figure 3 représente le principe de tracé au sol, de déroulement de parcours relatif et absolu, ainsi qu'un exemple de gestion d'étapes sur un carrefour.

La figure 4 représente un timon avec son système de sécurité.

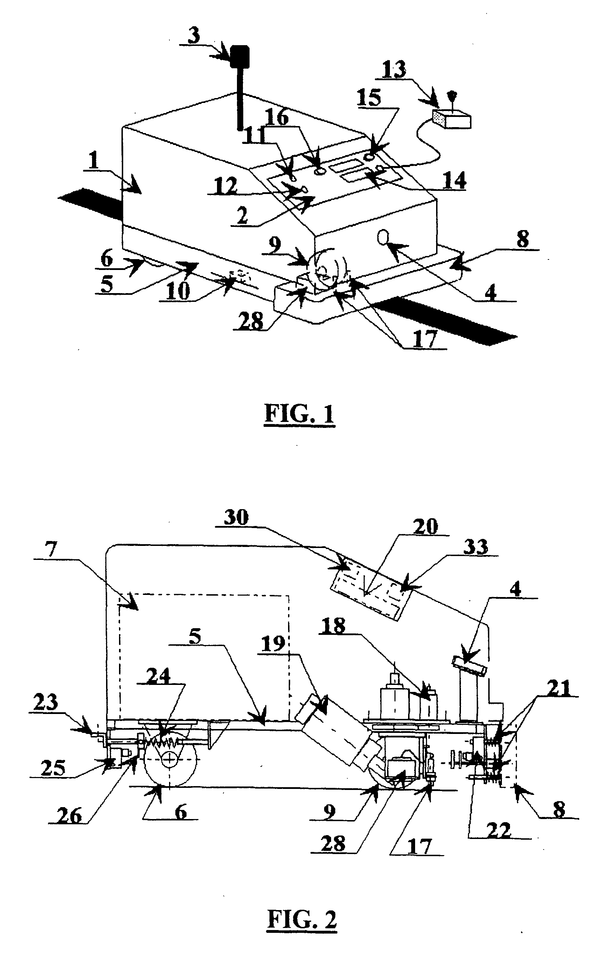

En référence à ces dessins, le chariot comporte :
En figure 1, une carrosserie métallique (1) supportant un tableau de commande (2) et un gyrophare (3), un radar (4), une cellule de détection d'étape (10), un joystick (13).
En figure 2, un châssis (5) est supporté par des roues arrières (6) et par une roue avant motrice et directrice (9) supportant un dispositif de guidage (17) et un lecteur de puce électronique (28), une batterie à courant continu (7), un pare choc (8), un crochet d'attelage (23), un système de communication radio (30), un récepteur radio (33).

La présente invention est décrite ci-après de manière plus détaillée. Il est représenté schématiquement l'état de la technique ainsi que divers modes de réalisation.

Selon la figure 2, une roue avant (9) est entraînée en traction par un moteur électrique (19) à courant continu. L'ensemble est entraîné en rotation par un moteur de direction (18), formant ainsi un bloc traction rotation. Devant ou derrière ce bloc sont embarquées deux cellules de guidage (17), photoélectriques ou optiques ou inductives , pivotant simultanément avec la roue (9) tout en suivant une bande guide . L'information recueillie par ces cellules de guidage commandera la navigation du chariot.

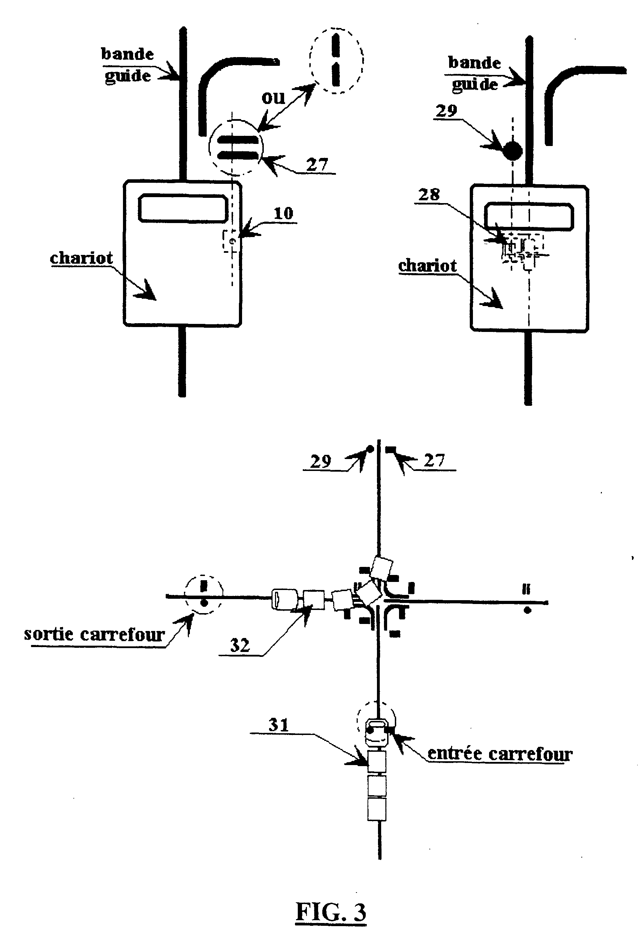

Selon la figure 3, la détection des étapes, selon un déroulement de parcours en relatif, est obtenue par une cellule photoélectrique ou optique ou inductive (10) fixée sur un châssis (5). Cette cellule de détection permet d'identifier une étape du parcours par l'intermédiaire d'un marquage (27), réalisé par plusieurs bandes adhésives parallèles collées au sol. L'information recueillie par cette cellule est gérée par le cerveau électronique (20).

Selon la figure 3, la détection des étapes, selon un déroulement de parcours en absolu, est obtenue par un lecteur de puce électronique embarqué (28) et par des puces électroniques (29) statiques disposées le long du parcours. Ce procédé consiste à stocker un numéro sur les puces ce qui permet de les identifier de manière unique dans un atelier. A ce numéro est associé une action physique (gauche pour changement à gauche, droite pour ...). Cette même information indiquera au chariot qu'il est ou n'est pas sur le bon parcours.

Selon les figures 1 et 3, la programmation de parcours par apprentissage s'effectue de la façon suivante :
un commutateur (11) de mise sous tension est activé et un commutateur (12) est mis en position « apprentissage actif ». Le chariot est placé à son point de départ à l'aide d'une manette joystick (13) qui permet de piloter manuellement le chariot. En appuyant sur un bouton départ (15) le chariot suit automatiquement la bande guide, qui décrit un parcours, et s'arrête à chaque étape dès que la cellule de détection (10) aperçoit un marquage (27) ou que le lecteur de puce (28) lit le numéro d'une puce (29). Ceci sur un parcours qui peut être de type ferme (en boucle), cyclique ou encore ouvert (comportant différents points de départ). A l'aide du pupitre de programmation (14) est renseigné le programme par une série de validations correspondant à une action (gauche, droite, tout droit, arrêt gare, entrée / sortie carrefour ou terminus). Le chariot exécute immédiatement cette action et se dirige à l'étape suivante. Si toutefois une étape est dépassée sans avoir été validée, le chariot peut faire marche arrière grâce à son joystick (13) et l'étape revalidée. Une fois cette apprentissage effectué le commutateur (12) est mis en position apprentissage non actif. Le chariot peut alors fonctionner en automatique, dit mode normal, sans opérateur en appuyant sur le bouton départ (15). En mode normal, à chaque passage du chariot sur un marquage (27) ou une puce (29) le chariot recherche en mémoire l'action à réaliser et l'exécute. En outre, en mode normal, il a été prévu de pouvoir insérer des étapes supplémentaires sans pour autant recommencer toute la programmation par apprentissage.

Selon la figure 3, la gestion de la circulation dans un carrefour repose sur un système de communication radio installé sur tous les chariots. L'entrée et la sortie d'un carrefour sont matérialisées au sol, soit par un marquage (27), soit par une puce électronique (29). Dès qu'un chariot et son convoi (31) entrent dans un carrefour, au moyen de son émetteur récepteur (30) il émet systématiquement un signal radio. Si un premier chariot et son convoi (32) sont déjà présents dans ce carrefour, alors ce même signal sera reçu par son propre récepteur (30) et informera en retour de sa présence. Le deuxième chariot et son convoi (33) devront attendre pour circuler librement la sortie hors du carrefour du premier chariot et de son convoi (32).

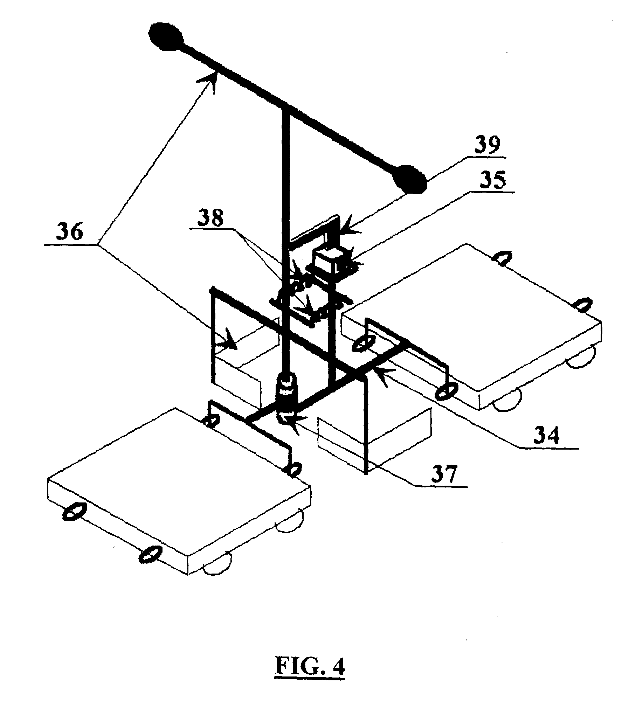

L'ensemble du dispositif de sécurité comprend :
Selon la figure 1, un bouton d'arrêt d'urgence (16) installé sur le tableau de commande (2). Une alarme signalant la présence du chariot en mouvement. Une détection radar (4) par ultrason se déclenche dès qu'une présence d'obstacle quelconque traverse son champ d'application (environ 70 cm). Ce déclenchement provoque l'arrêt instantané du chariot par coupure de l'alimentation, et la mise en marche s'effectue automatiquement après 5 secondes de temporisation.
Selon la figure 2, un pare chocs (8) monté sur un châssis (5) est pourvu de ressorts (21). Ce pare chocs, lorsqu'il y a rencontre avec un quelconque obstacle, agit sur le capteur (22) par l'intermédiaire de la compression des ressorts (21) et provoque l'arrêt immédiat du chariot.
Selon la figure 2, un premier dispositif de sécurité arrière se déclenche lorsqu'une tension, créée par l'arrêt d'un quelconque wagonnet et l'avance du chariot, est transmise à un crochet d'attelage (23). Si cette tension dépasse une valeur limite prédéfinie sur les ressorts (24), alors le déplacement de la touche (26) actionne un capteur (25), provoquant ainsi l'arrêt du chariot.
Selon la figure 4, un deuxième dispositif de sécurité arrière est placé sur un timon (34). Ce timon dispose d'un détecteur magnétique (35) pourvu d'une liaison radio qui communique avec un récepteur (33) situé dans le chariot, et d'une barrière de protection (36) qui pivote autour d'un axe central (37). Sur cette barrière est fixé un aimant (39) dont la stabilité est assurée par des ressorts (38) solidaires au timon. S'il y a rotation de la barrière de protection (36), l'aimant (39) échappe à la portée du détecteur magnétique (35), et ce dernier par liaison radio transmet l'information au récepteur (33), provoquant ainsi l'arrêt du chariot.

## Revendications

1. Chariot motorisé autoguidé, permettant de transporter des charges ou de tracter des wagonnets destinés à alimenter des lignes de production industrielle, comprenant une carrosserie métallique (1) supportant un tableau de commande (2) et un gyrophare (3), un radar (4), une cellule de détection d'étape (10), un joystick (13) ainsi qu'un châssis (5) supporté par des roues arrière (6) et par une roue avant motrice et directrice (9), entraînée en traction par un moteur électrique (19) à courant continu et sur laquelle roue sont embarqués un dispositif de guidage (17) et un lecteur de puces électroniques (28), le moteur électrique (19) à courant continu, la roue directrice (9), le dispositif de guidage (17) et le lecteur de puces électroniques (28) constituant ainsi un ensemble, une batterie à courant continu (7), un pare chocs (8), un crochet d'attelage (23), un système de communication radio (30) et un récepteur radio (33), **caractérisé :**
**en ce que** l'ensemble comportant ladite roue avant (9) entraînée en traction par ledit moteur électrique (19) à courant continu est entraîné en rotation par un moteur de direction (18), formant ainsi un bloc traction rotation, devant ou derrière lequel bloc est embarqué le dispositif de guidage constitué de deux cellules photoélectriques ou optiques ou inductives (17), ces cellules pivotant simultanément avec la roue avant (9) tout en suivant une bande guide,
de telle sorte que l'information recueillie par ces cellules de guidage commande la navigation du chariot.

2. Chariot motorisé autoguidé selon la revendication 1, **caractérisé :**
**en ce qu'**il comporte, pour la détection d'étapes selon un déroulement de parcours dit « en relatif », la cellule de détection d'étape photoélectrique ou optique ou inductive (10) fixée sur un châssis, (5) cette cellule de détection d'étape (10) permettant d'identifier une étape du parcours par l'intermédiaire d'un marquage (27),
de telle sorte que l'information recueillie par cette cellule de détection soit gérée par un cerveau électronique (20).

3. Chariot motorisé autoguidé selon la revendication 2, **caractérisé :**
**en ce qu'**il comporte, pour la détection des étapes selon un déroulement de parcours dit « en absolu », le lecteur de puce électronique embarqué (28) et des puces électroniques (29) statiques disposées le long du parcours, qui stockent un numéro permettant de les identifier de manière unique, et auquel numéro est associée une action physique, par exemple, gauche pour changement de direction à gauche, droite pour...,
de telle sorte que l'information recueillie par ce lecteur de puce soit gérée par le cerveau électronique (20), cette information indiquant au chariot sa présence sur le bon parcours.

4. Chariot motorisé autoguidé selon la revendication 3, **caractérisé :**
**en ce que**, pour la programmation de parcours par apprentissage, le chariot comporte :
- un commutateur de mise sous tension (11), qui est activé, et
- un commutateur (12) qui est mis en position dite « apprentissage actif » pour un positionnement du chariot à son point de départ à l'aide du joystick (13) qui permet de piloter manuellement le chariot,
- un bouton « départ » (15) pour que le chariot suive automatiquement la bande guide qui décrit un parcours et s'arrête à chaque étape, dès que la cellule de détection (10) aperçoit le marquage (27) ou que le lecteur de puces électroniques (28) lit le numéro de l'une des puces électroniques (29), ceci sur un parcours qui peut être de type fermé, c'est-à-dire, en boucle, cyclique ou encore ouvert, en d'autres termes, comportant différents points de départ.
- un pupitre de programmation (14) pour renseigner le programme par une série de validations correspondant à une action, par exemple gauche, droite, tout droit, arrêt gare, entrée / sortie carrefour ou terminus, pour que le chariot exécute immédiatement cette action et se dirige à l'étape suivante,
de telle sorte que, si une étape est dépassée sans avoir été validée, le chariot puisse faire marche arrière grâce au joystick (13) et l'étape soit revalidée, et
de telle sorte que, une fois cet apprentissage effectué le commutateur (12) soit mis en position dite « apprentissage non actif » pour que le chariot puisse fonctionner en automatique, dit mode normal, sans opérateur appuyant sur le bouton « départ » (15), et
de telle sorte que, en mode normal, à chaque passage du chariot sur le marquage (27) ou une des puces électroniques (29), le chariot recherche en mémoire l'action à réaliser et l'exécute, ayant été prévu en outre de pouvoir insérer des étapes supplémentaires sans pour autant recommencer toute la programmation par apprentissage.

5. Chariot motorisé autoguidé selon la revendication 3, **caractérisé :**
**en ce qu'**il comporte un système de communication radio installé sur tous les chariots pour la gestion de la circulation dans un carrefour, l'entrée et la sortie d'un carrefour étant matérialisées au sol, soit par le marquage (27), soit par une des puces électroniques (29).
de telle sorte que, dès qu'un deuxième chariot et son convoi (31) entrent dans un carrefour ), le deuxième chariot et son convoi (31) émette systématiquement un signal radio au moyen de son émetteur récepteur (30) et,
de telle sorte que, si un premier chariot et son convoi (32) sont déjà présents dans ce carrefour, alors ce même signal soit reçu par son propre récepteur (30) et pour informer en retour de sa présence le deuxième chariot et son convoi (31) qui devront attendre, pour circuler librement, la sortie du premier chariot et de son convoi (32) hors du carrefour.

6. Chariot motorisé autoguidé l'une quelconque des revendications précédentes, **caractérisé :**
**en ce qu'**il comporte un premier dispositif de sécurité arrière se déclenchant lorsqu'une tension, créée par l'arrêt d'un quelconque wagonnet et l'avance du chariot, est transmise au crochet d'attelage (23),
de telle sorte que, si cette tension dépasse une valeur limite prédéfinie sur des ressorts (24), alors le déplacement d'une touche (26) actionne un capteur (25), provoquant ainsi l'arrêt du chariot.

7. Chariot motorisé autoguidé selon l'une quelconque des revendications précédentes, **caractérisé :**
**en ce qu'**il comporte un deuxième dispositif de sécurité arrière placé sur un timon (34), qui dispose d'un détecteur magnétique (35) pourvu d'une liaison radio qui communique avec le récepteur radio (33) situé dans le chariot, et d'une barrière de protection (36) qui pivote autour d'un axe central (37), sur cette barrière étant fixé un aimant (39) dont la stabilité est assurée par des ressorts (38) solidaires du timon,
de telle sorte que, s'il y a rotation de la barrière de protection (36), l'aimant (39) échappe à la portée du détecteur magnétique (35), et ce dernier par liaison radio transmet l'information au récepteur (33), provoquant ainsi l'arrêt du chariot.

8. Chariot motorisé autoguidé selon l'une quelconque des revendications précédentes, **caractérisé :**
**en ce qu'**il coopère avec un dispositif de tracé au sol, définissant un parcours, qui est matérialisé au moyen de bandes adhésives appelées bandes guides.

9. Chariot motorisé autoguidé selon l'une quelconque des revendications 2 à 8, **caractérisé :**
**en ce que** le marquage (27), définissant une étape, est matérialisé par au minimum 2 bandes adhésives parallèles, pour une distinction entre ce marquage et une information parasite.

## Patentansprüche

1. Motorbetriebener, selbstgesteuerter Transportwagen zum Transportieren von Lasten oder zum Ziehen von Beschickungswagen in industriellen Fertigungslinien, umfassend eine Schalttafel (2) und eine Rundumleuchte (3) tragende Metallkarosserie (1), ein Radar (4), eine Sensorzelle zum Erfassen der Stationen (10), einen Steuerknüppel (13) sowie ein Fahrgestell (5), das auf Hinterrädern (6) und einem vorderen Antriebs- und Leitrad (9) gelagert ist, welches von einem Gleichstromelektromotor (19) angetrieben wird und auf welches eine Navigationsvorrichtung (17) und ein Chip-Lesegerät (28) montiert sind, so dass der Gleichstromelektromotor (19), das Leitrad (9), die Navigationsvorrichtung (17) und das Chip-Lesegerät (28) zusammen eine Einheit bilden, eine Gleichstrombatterie (7), eine Stoßstange (8), einen Zughaken (23), ein Funkübertragungsgerät (30) und einen Funkempfänger (33),
**dadurch gekennzeichnet, dass**
die das durch den Gleichstromelektromotor (19) angetriebene Vorderrad (9) aufweisende Einheit von einem Lenkmotor (18) drehbar angetrieben wird, so dass ein Antriebs- und Rotationsblock entsteht, wobei diesem Block die aus zwei photoelektrischen, optischen oder induktiven Sensoren (17) bestehende Navigationsvorrichtung vor- oder nachgeschaltet ist und diese Sensorzellen sich gleichzeitig mit dem Vorderrad (9) entlang eines Navigationsbands drehen,
so dass der Transportwagen durch die von den Navigationssensoren erfasste Information gesteuert wird.

2. Motorbetriebener, selbstgesteuerter Transportwagen nach Anspruch 1,
**dadurch gekennzeichnet, dass**
er zur Erfassung der Stationen auf einer sogenannten "relativen" Wegstrecke den auf einem Fahrgestell (5) befestigten photoelektrischen, optischen oder induktiven Sensor (10) aufweist, wobei über diesen Sensor zum Erfassen der Stationen (10) eine Station auf der zurückzulegenden Wegstrecke an ihrer Markierung (27) derart erkannt wird,
dass die durch diesen Sensor erfasste Information von einem Elektronengehirn (20) verwaltet wird.

3. Motorbetriebener, selbstgesteuerter Transportwagen nach Anspruch 2,
**dadurch gekennzeichnet, dass**
er zur Erfassung der Stationen auf einer sogenannten "absoluten" Wegstrecke das am Transportwagen angebrachte Chip-Lesegerät (28) und die entlang der Wegstrecke angeordneten stationären Chips (29) aufweist, welche eine Nummer speichern, mit der diese je einzeln erkannt werden können, wobei dieser Nummer eine physische Handlung, z.B. links für Linksabbiegen, rechts für..., zugeordnet ist,
so dass die durch dieses Chip-Lesegerät erfasste Information von einem Elektronengehirn (20) verwaltet wird, wobei diese Information dem Transportwagen meldet, dass er sich auf der richtigen Wegstrecke befindet.

4. Motorbetriebener, selbstgesteuerter Transportwagen nach Anspruch 3,
**dadurch gekennzeichnet, dass**
der Wagen zur Lemprogrammierung der Wegstrecke folgendes umfasst:
- einen Einschaltknopf (11), der aktiviert ist und
- einen Schalter (12), der in die dem sogenannten "aktiven Lernen" entsprechende Stellung gebracht ist, um den Transportwagen mit Hilfe des der manuellen Führung des Wagens dienenden Steuerknüppels (13) in seine Ausgangsstellung zu positionieren,
- eine "Start"-Taste (15), mit der der Wagen automatisch entlang des eine Wegstrecke darstellenden Führungsstreifens fährt und an jeder Station anhält, sobald der Sensor (10) die Markierung (27) erkennt oder das Chip-Lesegerät (28) die Nummer eines der elektronischen Chips (29) abliest, wobei dies auf einer Wegstrecke erfolgt, die entweder geschlossen (d.h. eine Schleife bildend), zyklisch oder aber offen - oder anders ausgedrückt verschiedene Ausgangspunkte aufweisend - sein kann,
- einen Programmierpult (14), um in das Programm eine Reihe von Handlungsfreigaben, beispielsweise links, rechts, geradeaus, Haltestation Stopp, Eingang/Ausgang, Kreuzung oder Endstation, einzuspeisen, damit der Transportwagen diese Handlung sofort ausführt und die nächste Station ansteuert,
so dass, wenn eine Station nicht angefahren, und also nicht freigegeben wurde, der Transportwagen mit dem Steuerknüppel (13) zurückgefahren und die Station dann freigegeben werden kann, und
so dass nach Beendigung dieses Lernvorgangs der Schalter (12) in die Stellung "Lernvorgang nicht aktiviert" gebracht wird, damit der Wagen automatisch, d.h. im Normalbetrieb, ohne Drücken der "Start"-Taste (15) durch das Bedienungspersonal, betrieben werden kann, und
so dass im Normalbetrieb, jedes Mal, wenn der Wagen die Markierung (27) oder einen der Chips (29) überfährt, der Wagen die auszuführende Handlung abruft und diese durchführt, wobei weiterhin vorgesehen ist, dass weitere Stationen zwischengeschaltet werden können, ohne dass die gesamte Lernprogrammierung wieder aufgenommen werden muss.

5. Motorbetriebener, selbstgesteuerter Transportwagen nach Anspruch 3,
**dadurch gekennzeichnet, dass**
er ein Funkübertragungssystem aufweist, welches auf allen Transportwägen installiert ist und der Regelung des Verkehrs an einer Kreuzung dient, wobei das Einfahren in eine Kreuzung bzw. das Verlassen derselben durch Markierungen (27) oder durch eines der Chips (29) am Boden ausgewiesen sind,
so dass, sobald ein zweiter Transportwagen mit seinen angehängten Beschickungswägen (31) in eine Kreuzung einfährt, der zweite Transportwagen mit seinen angehängten Beschickungswägen (31) systematisch über sein Sende-Empfangsgerät (30) ein Funksignal sendet und
so dass, wenn sich in dieser Kreuzung bereits ein erster Transportwagen mit seinen angehängten Beschickungswägen (32) befindet, dasselbe Signal von seinem eigenen Empfangsgerät (30) empfangen wird und dieser seinerseits den zweiten Transportwagen mit seinen angehängten Beschickungswägen (31) über seine Anwesenheit informiert, welcher daraufhin erst dann zur freien Weiterfahrt freigegeben wird, wenn der erste Transportwagen mit seinen angehängten Beschickungswägen (32) die Kreuzung verlassen hat.

6. Motorbetriebener, selbstgesteuerter Transportwagen nach einem der vorangegangenen Ansprüche,
**dadurch gekennzeichnet, dass**
er eine erste hintere Sicherheitsvorrichtung aufweist, welche dann ausgelöst wird, wenn eine durch das Anhalten eines der Beschickungswägen und der Weiterfahrt des Transportwagens erzeugte Spannung an den Zughaken (23) übertragen wird,
so dass, wenn diese auf Federn (24) ausgeübte Spannung einen vorbestimmten Grenzwert überschreitet, das Verschieben einer Taste (26) einen Aufnehmer (25) betätigt, wodurch der Transportwagen zum Anhalten gebracht wird.

7. Motorbetriebener, selbstgesteuerter Transportwagen nach einem der vorangegangenen Ansprüche,
**dadurch gekennzeichnet, dass**
er eine zweite hintere Sicherheitsvorrichtung aufweist, welche auf einer Deichsel (34) angebracht ist, wobei diese über einen Magnetdetektor (35), der eine mit dem im Transportwagen befindlichen Funkempfangsgerät (33) in Verbindung stehende Funkverbindung aufweist, sowie über eine um eine mittig angeordnete Achse (37) drehende Schutzschranke (36) verfügt, auf der ein Magnet (39) befestigt ist, dessen Stabilität durch einstückig mit der Deichsel ausgebildete Federn (38) gewährleistet wird,
so dass bei Drehung der Schutzschranke (36) der Magnet (39) außer Reichweite des Magnetdetektors (35) gerät und dieser über Funk dem Empfangsgerät (33) die Information übermittelt, die dazu führt, dass der Transportwagen angehalten wird.

8. Motorbetriebener, selbstgesteuerter Transportwagen nach einem der vorangegangenen Ansprüche,
**dadurch gekennzeichnet, dass**
er mit einer Bodenmarkierungsvorrichtung zusammenarbeitet, welche eine Wegstrecke festlegt, die durch Führungsstreifen genannte Klebestreifen ausgewiesen ist.

9. Motorbetriebener, selbstgesteuerter Transportwagen nach einem der Ansprüche 2 bis 8,
**dadurch gekennzeichnet, dass**
die eine Station ausweisende Markierung (27) aus mindestens 2 parallelen Klebestreifen besteht, damit zwischen dieser Markierung und einer Störinformation unterschieden werden kann.

## Claims

1. A motor-driven, automatic guided trolley for conveying loads or for drawing trucks intended.to supply industrial production lines, said trolley comprising a metal body (1) supporting a control panel (2) and a revolving light (3), a radar (4), a station detecting cell (10), a joystick (13) as well as a chassis (5) carried on rear wheels (6) and on one driving and steering front wheel (9) which is traction driven by a direct current electric motor (19) and on which a guiding device (17) and a chip reading apparatus (28) are mounted so that the direct current electric motor (19), the leading wheel (9), the guiding device (17) and the chip reading device (28) form a unit, a direct current battery (7), a bumper (8), a coupling hook (23), a radio communication system (30) and a radio receiver (33),
**characterized in that** the unit comprising said front wheel (9), which is traction driven by said direct current electric motor (19), is rotationally driven by a steering motor (18), thus forming a traction rotation block, in front of or behind which block there is mounted the guiding device formed from two photoelectric, optic or inductive cells (17), said cells pivoting simultaneously with the front wheel (9) while following a guide belt,
so that the information collected by said guidance sensors controls the trolley's progress on the production line.

2. The motor-driven, automatic guided trolley according to claim 1,
**characterized in that** it comprises said photoelectric, optic or inductive station detecting cell (10) for detecting stations along a so-called "relative" travel path, said station detecting cell (10) being secured to a chassis (5) and allowing a station along the travel path to be identified by means of a marking (27),
so that the information collected by said detector cell is managed by an electronic brain (20).

3. The motor-driven, automatic guided trolley according to claim 2,
**characterized in that** it comprises, for detecting the stations along a so-called "absolute" travel path, the on-board chip reading device (28) and the stationary chips (29) disposed along the travel path which store a number allowing every single one of them to be identified, said number being assigned a physical action such as left for turning to the left, right for ...,
so that the information collected by said chip reading device is managed by the electronic brain (20), said information apprising the trolley that it is on the right travel path.

4. The motor-driven, automatic guided trolley according to claim 3,
**characterized in that**, for programming the travel path by learning, the trolley comprises:
- an energizing switch (11) that is activated and
- a switch (12) that is brought to the position called "active learning" for positioning the trolley on its departure point using the joystick (13) for manually controlling the trolley,
- a "start" button (15) for causing the trolley to automatically follow the guide belt which defines a travel path and to stop at each station as soon as the detector cell (10) senses the marking (27) or the chip reading device (28) reads the number of one of the chips (29), with said path of travel being of the type that is either closed, meaning loop-shaped, cyclic or open, that is with different departure points,
- a programming panel (14) for feeding the program with a series of enabling signals corresponding to an action such as left, right, straight forward, stop station, entering or exiting a junction or terminus so that the trolley is caused to immediately perform this action and to proceed to the next station,
so that, if the trolley has moved past a station without said station having been validated, the trolley may be caused to return to said station for validation by means of the joystick (13) and
so that, once said learning has been performed, the switch (12) is brought to the position called "learning inactivated" so that the trolley is allowed to operate automatically, which is the normal mode of operation, without an operator pushing the "start" button (15), and
so that, in normal operation, every time the trolley passes on top of the marking (27) or of one of the chips (29), the trolley retrieves from the memory the action to be performed and carries it out, with the possibility being furthermore provided to introduce additional stations without having to start programming by learning all over again.

5. The motor-driven, automatic guided trolley according to claim 3,
**characterized in that** it comprises a radio communications system mounted on all of the trolleys for managing the traffic flow at a junction, the junction entrance and exit being realized on the floor either by a marking (27) or by one of the chips (29)
so that, as soon as a second trolley with its trailing trucks (31) enters a junction, the second trolley with its trailing trucks (31) systematically sends a radio signal using a transceiver (30) and
so that, if a first trolley with its trailing trucks (32) is already in the junction, this very signal is received by its own receiver (30) which in turn informs the second trolley and its trailing trucks (31) that the first trolley is presently in the junction and that it must wait for the first trolley and its trailing trucks (32) to have left the junction before it is allowed to travel freely again.

6. The motor-driven, automatic guided trolley according to any of the afore mentioned claims,
**characterized in that** it comprises a first rear safety device that is activated in response to a stress which, generated by any stopping truck while the trolley continues to progress, is transmitted to the coupling hook (23),
so that, if said stress exerted on springs (24) exceeds a predetermined limiting value, a sensor (25) is actuated by sliding a switch (26), which causes the trolley to stop.

7. The motor-driven, automatic guided trolley according to any of the afore mentioned claims,
**characterized in that** it comprises a second rear safety device that is placed on a tiller (34) being comprised of a magnetic detector (35) equipped with a radio connection for communicating with the radio receiver (33) located on board the trolley and of a protection barrier (36) pivoting about a central axis (37), a magnet (39) the stability of which is provided by springs (38) formed integral with the tiller being secured to said barrier,
so that, if the protection barrier (36) rotates, the magnet (39) is moved out of the detection range of the magnetic detector (35) which then radio transmits the information to the receiver (33), causing the trolley to stop as a result thereof.

8. The motor-driven, automatic guided trolley according to any of the afore mentioned claims,
**characterized in that** it cooperates with a system of markings on the floor which defines a travel path realized by means of adhesive strips that are termed guide strips.

9. The motor-driven, automatic guided trolley according to any of the claims 2 through 8,
**characterized in that** the marking (27), which defines a station, is realized by at least 2 parallel adhesive strips in order to allow the distinction of said marking from an interference information.
